# EUROPEAN PATENT APPLICATION

(11) **EP 2 087 952 A1**
(43) Date of publication of application: **12.08.2009**
(21) Application number: 09380019.1
(22) Date of filing: 06.02.2009
(51) Int. Cl.: B21F 27/12

(54) **Method for welding the framework of a reinforced concrete structural element and corresponding welding device and machine**

(30) Priority: 07.02.2008 ES 200800396
(71) Applicant: Mecànica Riells S.L., 17451 Sant Feliu de Buixalleu (Girona) (ES)
(72) Inventor: Salichs Puig, Josep, 08474 Gualba (Barcelona) (ES); FrÍas Redondo, Juan Antonio, 17400 Breda (Girona) (ES)
(74) Representative: Curell Aguilà, Marcelino

(57) **Abstract**

Method for welding the framework of a reinforced concrete structural element and corresponding welding device and machine. In the invention, framework (6) comprises at least one containing transverse rod (8) that defines the limits of the cross section of framework (6) and a plurality of longitudinal rods (7), arranged inside said cross section. The method comprises an automated holding step wherein holding clamps (20) are positioned automatically and automatically hold longitudinal rods (7) against transverse rod (8) in a welding position. This welding position corresponds to the relative position of rods (7, 8) in framework (6). Subsequently a welding step is provided wherein transverse rod (8) and each longitudinal rod (7) are welded to one another by welding means (22).

## Description

### Field of the invention

This invention relates to a method for welding the framework of a reinforced concrete structural element where said framework comprises at least one transverse containing rod that defines the cross section of said framework and a plurality of longitudinal rods, arranged inside said cross section.

Also, the invention relates to a device for welding the framework of this structural element and a machine that includes the welding device according to the invention.

### State of the art

In the present invention, the term "reinforced concrete structural element" is understood to be any reinforced concrete element that does not only have a flat, grill framework. Examples of these structural elements are pillars, beams, joists or others. On the other hand, the general term "rods" relates both to the bars and the wires that may configure the framework of the structural element. These bars or wires are drawn or corrugated. Also, it is worth mentioning that in the art, the transverse rods are also popularly known as reinforcement stirrups.

The frameworks imbedded in reinforced concrete structures are intended to absorb the tensile and shearing stresses to which the concrete structure is subjected. These frameworks are widely used both in the domestic architecture and civil engineering sectors. Usually, in the state of the art, these frameworks are manufactured *in situ* in a manual fashion. In particular, workers produce the three-dimensional rod frame for the framework, manually, on site, using longitudinal rods joined together by a series of transverse rods contained within a plane. These transverse rods usually have a closed square, triangular or circular shape, but they can also be open.

If for example, on the building site, a square section framework for a loading beam is required, the worker makes a first square shaped preliminary structure of transverse rods, arranged along the length of the beam and joined together by longitudinal wire rods. The contact points between the transverse rods and the wire rods are welded together. In the invention, the term "wire rod", as opposed to a general rod, is understood to be a smooth, small-diameter wire that is not corrugated or drawn, and does not have a structural purpose. These longitudinal wire rods are arranged outside the transverse rods, on the symmetry axes of the square shape. Their purpose is merely to prepare the preliminary form for the final framework. These wire rods arranged outside the transverse rods do not really reinforce the grill structure. Therefore, the rods that really provide the mechanical strength in the framework in use are mounted afterwards on the inner face of the transverse rods. These inner rods are joined to the transverse rods by a completely manual operation, using binding wires or by welding.

On the other hand, owing to the long time it takes to make the frameworks and the need to have the material on hand to produce them, means that the rods are stored on the actual building site for relatively long periods of time. The rods must be stored and protected adequately from the rain, damp, aggressive atmospheric conditions and other harmful factors. This on site storage cannot always be done in a simple way, because usually there is not enough sheltered storage space. For example, when building a home, particularly in the initial phase of laying the foundations and until the initial roof structure has been erected, there is not enough sheltered storage space. This is a serious drawback, because the rods or frameworks exposed to the above-mentioned weather conditions may need to be stored for relatively long periods of time. So, by the time this material is needed to produce the reinforced concrete structures it may have been rendered useless. Also when this material is going to be used, it is important to ensure that the oxide has not excessively affected the properties of the rods and that they are free of elements such as paint, dust, oil, earth or others, because these agents could serious jeopardise the mechanical characteristics of the definitive concrete structure.

### Disclosure of the invention

The aim of the invention is to provide a solution wherein the frameworks can be sent to the site, in a prefabricated state and ready for use. This aim is achieved by means of a welding process of the type indicated at the beginning, characterised in that the method comprises an automated holding step wherein holding clamps are positioned automatically and automatically hold said longitudinal rods against said transverse rod in a welding position, said welding position corresponding to the relative position of said rods in said framework, and a welding step wherein said transverse rod and each longitudinal rod are welded together in said welding position by welding means

In fact, the invention makes it possible to produce frameworks in a particularly fast way so that they can be supplied to the building site with a high quality grade and avoiding the drawbacks described in the state of the art. Therefore, the material for the frameworks does not need to be stored on site for long periods of time in conditions that are difficult to control, which makes it easier to improve the final quality of the reinforced concrete structure. Furthermore, thanks to the method, builders can control their stock of material much better, which also benefits production costs.

As already mentioned, in the state of the art the rods are usually joined together by fine binding wires or by welding. This hinders and slows down production. Therefore, preferably, said welding step is a resistance welding step. This resistance welding step implies that no additional material is added, and that instead the welding is performed simply by the pressure between the bars and by applying a high current that melts the material at the point of contact.

Preferably during said welding step, each longitudinal rod has associated welding means, whereby said longitudinal rods are welded simultaneously with said transverse rod. This facilitates automated production using short processing times. So, it is easier to produce frameworks on demand, thereby avoiding storing the material in a semi-manufactured state for excessively long periods of time.

Preferably, in the method according to the invention said welding clamps weld said longitudinal rods in a plane.

Preferably the method comprises an initial positioning step wherein automatically controlled driving means place support means in the position corresponding to the position of said longitudinal rods in said framework.

Preferably the method also comprises a step of dragging said framework, wherein said framework is successively dragged a certain distance by a dragging carriage, corresponding to the pitch of said framework. The pitch of the framework is the distance between the transverse rods. Therefore, the opening can easily be programmed using numeric control, so that the transverse rods are arranged in their correct position with an accuracy that is unobtainable using manual methods. Also, the pitch does not have to be constant, as in most frameworks, the position of the transverse rods varies along the length thereof.

The invention also considers the problem of providing a device and a machine that allow the method according to the invention to be implemented. This device comprises a frame and a plurality of holding clamps that can be orientated with respect to said frame and each of said clamps being able to hold a longitudinal rod of said framework against a transverse rod of said framework in contact therewith, forming a welding position, said device further comprising welding means able to produce a welded joint between said longitudinal rods and said transverse rod in said welding position. The welding position relates to the relative position between rods pressed against one another, before the welding step.

Beforehand, any appropriate welding method can be applied to weld the framework. However, preferably said welding means are resistance welding means.

Although the welding could be performed by a single robot that went along welding each positioning point, it is preferable that said clamps comprise the said welding means. This way, the welding times are drastically reduced, because all the welding is performed at the same time.

Alternatively, said clamps are self-centring with respect to said welding position, so as to avoid tension in the framework, caused by the clamp's holding action.

In the building sector, frameworks are not particularly standardised, and they are adapted to each specific project. In other words, it is important that a welding device like the one in the invention allows a large degree of flexibility regarding the dimensions of the framework section. Therefore, preferably said clamps are mounted so that they can be moved by guiding means within a plane with respect to said frame.

Preferably said clamps are positioned automatically by first driving means that drive the respective first positioning means associated with said clamps. Therefore, the machine can change welding profiles quickly.

On the other hand, it is desirable that the clamps use as little energy as possible when they move. So, preferably the support of said clamps is movably mounted in a first direction on a transom by first guiding means, and said transom is movably mounted in a second direction on said frame by second guiding means.

Furthermore, preferably said clamps are movably mounted longitudinally with respect to a support by third guiding means. Thanks to this arrangement, frameworks with a circular cross section using more than four longitudinal rods can be produced easily.

Although the transverse rods can be fed manually into the welding device, it is advisable that they be fed as quickly and accurately as possible so as to improve the quality of the product and reduce production time. So, preferably, the welding device comprises a positioning arm for said transverse rods, said positioning arm being movable with respect to said frame in the direction of said longitudinal rods, and between a pick-up position for said transverse rods and a welding position on said framework. In addition, by means of the positioning arm a framework with more uniform mechanical performance is obtained. Also, preferably said positioning arm moves the transverse rod by abutting on the face of transverse rod away from said clamps.

Finally, the invention also proposes a machine comprising a welding device according to the invention. This machine preferably comprises support means for said longitudinal rods upstream of said welding device, said support means positioning said longitudinal rods in their final position in the framework. As will be seen later, the rods can be arranged in the support means in a loading area, making use of the welding times in the framework in process. This facilitates the flow of material, reduces idle times and therefore optimises costs.

Preferably the machine comprises a dragging carriage for said framework downstream of said welding device.

### Brief description of the drawings

Other advantages and characteristics of the invention will be apparent from the following description, wherein, in a non-limiting manner, a preferable embodiment of the invention is described, with reference to the accompanying drawings, in which:

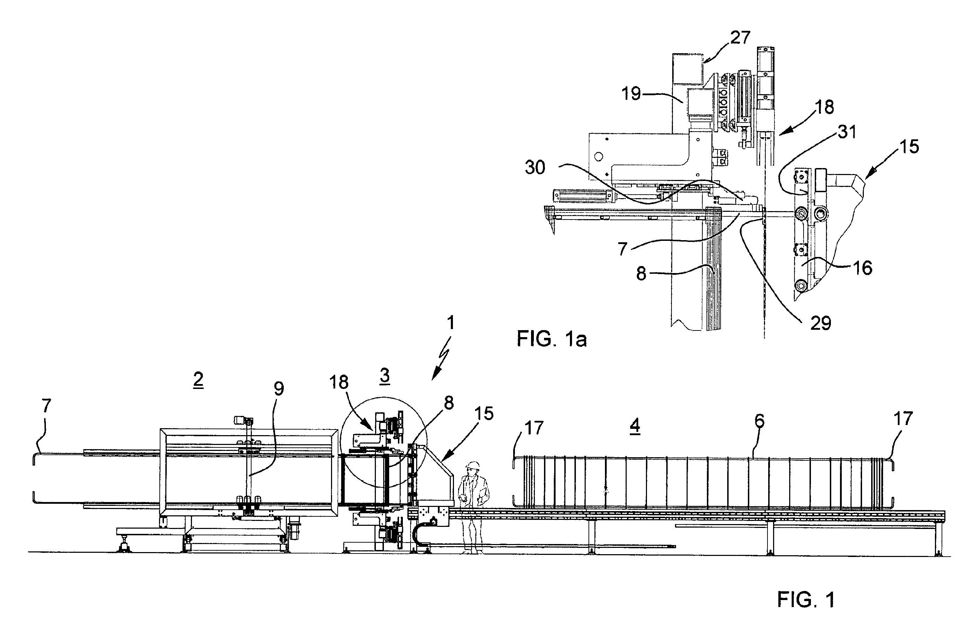

Fig. 1 is a front view of a machine for performing the method according to the invention.
Fig. 1 a is a detail view of the positioning arm of the transverse rod of the machine in Figure 1.
Fig. 2 is a side view of the machine in Figure 1.
Fig. 3 is a top view of the machine in Figure 1.

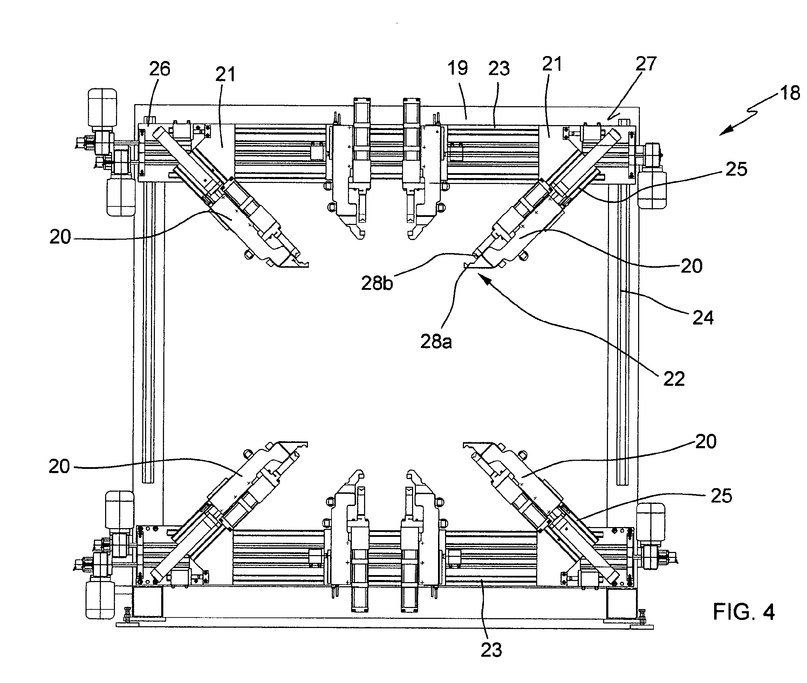

Fig. 4 is a front view of the welding device.
Figs. 5a to 5f are front views of the welding device during the welding process.
Fig. 6 is a front view of a second embodiment of the welding device.

### Detailed description of some embodiments of the invention

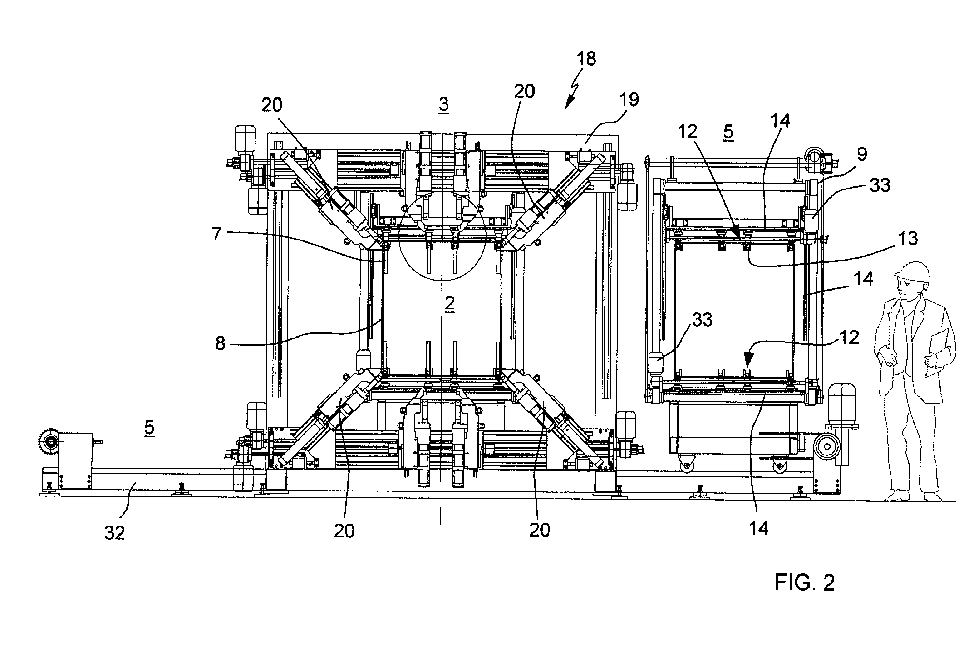

Figures 1 to 3 show a welding machine 1 including the welding device 18 for producing a framework 6 of a resistant reinforced concrete element in accordance with the method according to the invention.

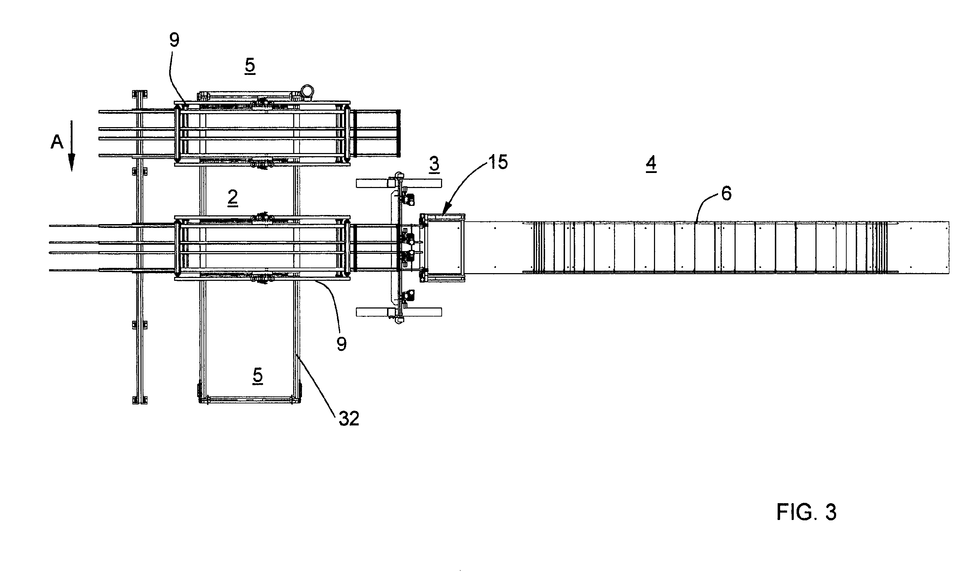

Machine 1 according to the invention is made up of four main areas. From left to right in Figure 1, three of these areas can be seen. First of all, a feeding area 2 for the longitudinal rods 7, a welding area 3 for the holding and welding step, wherein the transverse rods 8 are welded with the longitudinal rods 7, and a reception area 4 towards which the framework 6 is dragged during the dragging step. Finally, Figure 3 shows the fourth area of machine 1. On both sides of feeding area 2 two loading areas 5 are provided wherein the initial positioning step of longitudinal rods 7 is performed, before feeding them to welding device 18. In loading area 5, machine 1 is provided with two loaders 9 that are movable on rails 32 up to the feeding area 2, on an alternate basis, so as to eliminate idle times in welding area 3.

Loader 9 essentially comprises a main frame and support means 12 for longitudinal rods 7, configured as rollers 13 that can be orientated horizontally and vertically by means of the respective guides 14 of loader 9. Support means 12 are moved by positioning means driven by driving means 33. Driving means 33 are controlled automatically by control means not shown in the drawings. So, first of all, the actual loader 9 automatically positions support means 12 according to the shape of framework 6 to be welded. Then, a worker arranges within support means 12 all the longitudinal rods 7 needed to make framework 6. In this embodiment, the worker has arranged eight longitudinal rods 7 in support means 12, forming a square section. Once the worker has correctly arranged all the longitudinal rods 7 horizontally and vertically, he arranges all the transverse rods 8 needed to make framework 6 grouped at the front end of framework 6 next to welding area 3. These transverse rods 8 or straps are arranged outside longitudinal rods 7. So, once loader 9 has been loaded, it is moved along rails 32 transverse to the longitudinal direction of machine 1, in the direction of arrow A in Figure 3, to feeding area 2.

In feeding area 2, the worker manually advances longitudinal rods 7 until they abut the rear face 31 of dragging carriage 15. Alternatively, this operation could be automated using appropriate driving and controlling means. The initial position of dragging carriage 15 is determined by the distance known in the art as the overlap 17. Overlap 17, which is the distance between the end of framework 6 and the first transverse rod 8, makes it possible to overlap two consecutive frameworks 6 in the reinforced concrete structure. So, once longitudinal rods 7 have abutted dragging carriage 15, machine 1 begins the welding process that is explained in detail below with the characteristics of welding area 3.

Welding device 18 for framework 6 is arranged in welding area 3. Said device 18 comprises a main frame 19 on which eight movable clamps 20 are mounted. Each clamp 20 comprises resistance welding means 22 made up of electrodes 28a, 28b which are also the actual claws in clamps 20. The fact that the actual clamp 20 comprises its own resistance welding means 22 allows for a much more compact machine 1 and also reduces production time. Nevertheless, in an alternative embodiment different arrangements would be feasible, both in terms of the welding, and in terms of the arrangement of welding means 22. For example, instead of each clamp 20 having its own welding means 22, a single welding robot could be arranged that successively welded the various positions. In turn, instead of resistance welding, this robot could weld with a filler, in other words, perform arc welding.

As can be seen in the Figures, clamps 20 of the device according to the invention have two or three degrees of freedom for moving with respect to frame 19. In this embodiment, clamps 20 move within a plane parallel to the main vertical plane 27 of frame 19 by means of guiding means 23, 24, 25.

First of all, all clamps 20 can move in the longitudinal direction with respect to their support 21 on third longitudinal guiding means 25. As can be seen in the figures, in this case this longitudinal movement with respect to support 21 is performed diagonally at 45° with respect to the horizontal direction. Furthermore, support 21 of each clamp 20 can move horizontally with respect to frame 19 via first horizontal guiding means 23. Finally, device 18 in this embodiment has a mobile upper transom 26 that carries the respective supports 21 of the four upper clamps 20. Mobile transom 26 is mounted slidingly in the vertical direction with respect to frame 19 via second vertical guiding means 24. This makes it possible to modify the height of upper clamps 20 with respect to frame 19. All the movements of clamps 20 are controlled automatically by first control means not shown, which act upon first driving means that drive the respective first positioning means. In other words, in this case the electric motors drive the respective spindles controlled by an electronic control. This plurality of movements provides device 18, and consequently machine 1, with greater flexibility, and also makes it possible to quickly change the section of framework 6 to be produced, according to production requirements. This way, machine 1 practically has no idle time when positioning clamps 20 because the positioning step of clamps 20 is performed automatically in a few seconds. Also, thanks to all the degrees of freedom of clamps 20, welding device 18 can produce frameworks 6 with any type of cross section, such as for example, square, triangular, circular or others. Although this is a preferable embodiment of device 18, simplified alternatives exist wherein, for example, clamps 20 can only move with respect to frame 19 via the second guiding means 24, so that only the height of the cross section of framework 6 can be modified. Another alternative would be a device 18 with first and second guiding means 23, 24 that would allow clamps 20 to move vertically and horizontally. In this case, device 18 could not be used to produce circular section frameworks with more than four longitudinal rods 7. Also it is worth mentioning that although in the embodiment the four lower clamps 20 of device 18 cannot move vertically using the second guiding means 24, a device 18 could be provided wherein all the clamps have the three degrees of freedom mentioned earlier. Finally, the vertical and horizontal directions described in this embodiment should not be understood as limitations, because the first and second guiding means 23, 24 could be orientated at an angle with respect to the horizontal direction.

As mentioned earlier, the orientation of clamps 20 with respect to frame 19 consists of a combination of linear movements. Nevertheless, the linear movement of clamps 20 at the corners of device 18, with respect to their supports 21 could be a rotational movement. However, this rotational movement of clamps 20 would require more vertical space when moving rods 7 closer or away from the corners of framework 6.

So, in this advantageous embodiment, when clamps 20 have finished welding longitudinal rods 7 at the corners of framework 6 and have to be removed, they only need to move slightly so as to move away from framework 6 in the horizontal direction without taking up the vertical space of the sides of framework 6. This means it is possible to produce extremely small frameworks 6, as upper and lower clamps 20 in one and the same corner of framework 6 never touch each other during the approximation or removal movement prior to welding.

Another important characteristic of clamps 20 is that electrodes 28a, 28b, which make up the claws, are self-centring. So, electrodes 28a, 28b do not pull longitudinal rods 7 against transversal rod 8, but instead they adapt to the position thereof with respect to framework 6. This reduces the introduction of any internal tension prior to welding because rods 7, 8 are welded in their natural position.

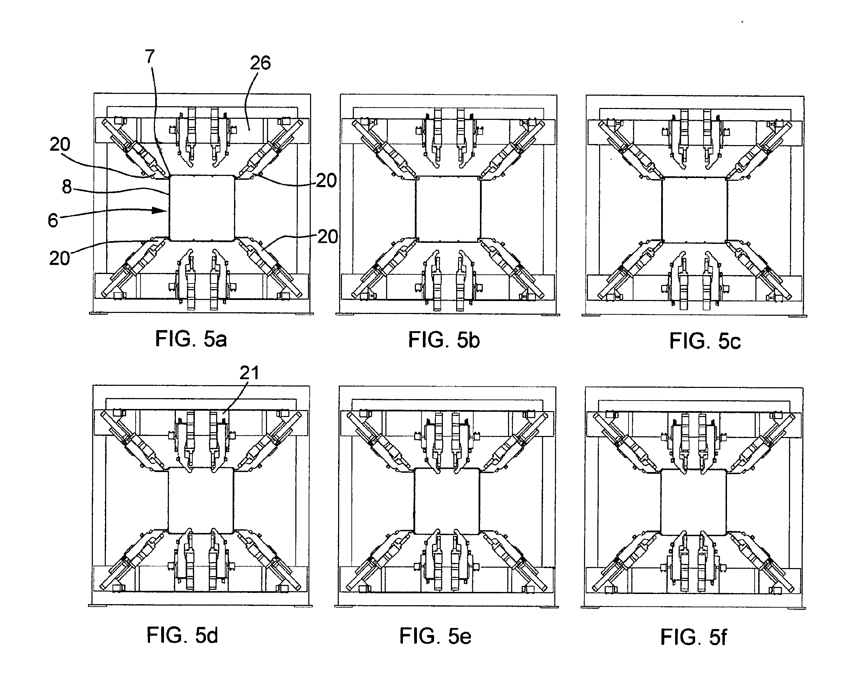

Next, on the basis of Figures 5a to 5f, the welding process of a square cross section framework 6 is explained in detail. As already mentioned, the process comprises the clamp positioning and holding step and subsequently the welding step. Once the worker has arranged all the longitudinal rods 7 abutting dragging carriage 15, welding device 18 automatically seeks the first transverse rod 8 to be welded, using a sensor and advances it to its welding position by means of a positioning arm 30, shown in detail in Figure 1a. It is important to highlight that positioning arm 30 advances transverse rod 8 by pushing it or pulling it on face 29 of said transversal rod 8 facing away from clamps 20 and next to feeding area 2, instead of holding it in a clamp. This characteristic has been found to be particularly advantageous because it prevents transverse rod 8 from becoming jammed on longitudinal rods 7, and also it greatly simplifies the mechanism because a clamping clamp is not required.

At the beginning of the holding step, welding device 18 automatically and simultaneously positions the eight outer clamps 20 to weld the longitudinal rods 7 at the corners of the square by moving the mobile upper transom 26 of supports 21 and the clamps 20 with respect to supports 21. So, as shown in Figure 5a, clamps 20 in the corners are separated horizontally a few millimetres. In Figure 5b, clamps 20 move towards the corners of framework 6 towards their final position. Then, as shown in Figure 5c, in the final part of the holding step, clamps 20 close their claws, i.e. electrodes 28a, 28b, by closing in a self-centering manner at 45° with respect to rods 7, 8 without introducing tensions before welding. Finally, in the welding step electrodes 28a, 28b perform the welding point within a plane. In Figure 5d, clamps 20 at the corners of framework 6 are slightly moved away, horizontally without taking up vertical manoeuvring space, to the position shown in Figure 5b and the four central clamps 20 move near their position by moving in a longitudinal direction vis-à-vis their respective support 21. In Figure 5e, central clamps 20 move towards one another horizontally to the welding position. Finally, in Figure 5f, clamps 20 close electrodes 28a, 28b in a self-centring manner and create their own respective welding points. It is worth mentioning that, as the movements of clamps 20 optimise the space taken up, as described above, in this embodiment it would not be necessary to weld in six steps as shown. However, this example, also tries to illustrate the steps that are necessary in the event that framework 6 had a particularly small cross section and there was not enough space for central clamps 20 and side clamps 20 to weld simultaneously.

Once the first transverse rod 8 has already been welded, a rigid unit is available and it can be manipulated by dragging carriage 15. At this moment, the dragging step begins, which successively alternates with the holding and welding steps until framework 6 is finished. Dragging carriage 15 arranged at the beginning of reception area 4, has a clamp 16 that closes horizontally and transversally with respect to framework 6 and holds it in the overlap area 17. Next, dragging carriage 15 pulls framework 6 in the direction of reception area 4 of Figure 1 a predetermined distance. In other words, when dragging carriage 15 reaches the next welding position corresponding to a pitch of a transverse rod 8, then it stops. Then, the cycle begins again by feeding a new transverse rod 8 via positioning arm 30 and then holding and welding the respective rod 8. It is worth mentioning that the operation to close clamp 16 is only necessary when starting to produce framework 6.

In the interest of simplicity, Figures 1 and 3 show a framework in process in feeding area 2 and a finished framework 6 in reception area 4. Nevertheless, in practice, when framework 6 is finished, dragging carriage 15 would be at the right of Figure 1, in front of finished framework 6. Then, clamp 16 of dragging carriage 15 would open and a worker or an automatic system would unload framework 6. Then, dragging carriage 15 would return to the initial position to start a new framework 6 corresponding to the position shown in Figures 1 and 3.

It is also worth mentioning that dragging carriage 15 moves by means of a rack mechanism arranged below the table in reception area 4.

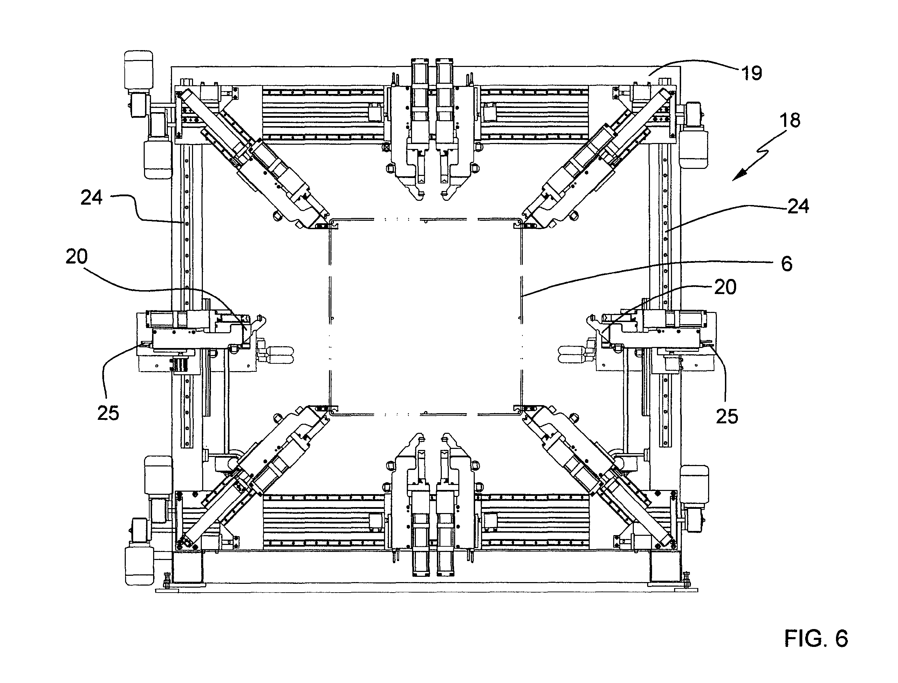

Finally, Figure 6 shows a second embodiment of welding device 18 according to the invention. In this case, device 18 comprises ten clamps 20 that are moveable with respect to frame 19, by means of the first, second and third guiding means 23, 24, and 25. However, in this case the two additional clamps 20 provided in the vertical posts of frame 19, can be moved horizontally with respect to their support 21 by means of the second guiding means 24, and vertically with respect to frame 19 by means of the third guiding means 25. These clamps 20 on the sides of frame 19 make it possible to automatically produce frameworks 6 with longitudinal rods 7 at the sides. On the other hand, in the embodiment explained earlier, these side rods must be welded by hand in a subsequent process. Again this reduces processing time.

Therefore, as explained, this invention makes it possible to supply prefabricated frameworks to the site in a particularly profitable and quick manner. It is important to highlight how quickly the machine obtained with this invention is prepared. This detail is particularly important because it means that this machine can produce small series profitably and with virtually no idle times, since the machine does not require support tools for rods 7, 8.

## Claims

1. Method for welding the framework of a reinforced concrete structural element where said framework (6) comprises
[a] at least one containing transverse rod (8) that defines the limits of the cross section of said framework (6) and
[b] a plurality of longitudinal rods (7), arranged inside said cross section,
**characterised in that** said method comprises
[c] an automated holding step wherein holding clamps (20) are positioned automatically and automatically hold said longitudinal rods (7) against said transverse rod (8) in a welding position, said welding position corresponding to the relative position of said rods (7, 8) in said framework (6), and
[d] a welding step wherein said transverse rod (8) and each longitudinal rod (7) are welded together in said welding position by welding means (22).

2. Welding method according to claim 1, **characterised in that** in said welding step each clamp (20) has one of said welding means (22) associated thereto, such that said longitudinal rods (7) are welded simultaneously to said transverse rod (8).

3. Welding method according to claim 1 or 2, **characterised in that** it comprises an initial positioning step wherein automatically controlled driving means (33) place support means (12) in the position corresponding to the position of said longitudinal rods (7) in said framework (6).

4. Welding method according to any of the claims 1 to 3, **characterised in that** it comprises a step of dragging said framework (6), wherein said framework (6) is successively dragged a certain distance by a dragging carriage (15), corresponding to the pitch of said framework (6).

5. Welding device for producing the framework of a reinforced concrete structural element, **characterised in that** it comprises a frame (19) and a plurality of holding clamps (20) that can be orientated with respect to said frame (19) and each of said clamps (20) being able to hold a longitudinal rod (7) of said framework against a transverse rod (8) of said framework (6) in contact therewith, forming a welding position, said device (18) further comprising welding means (22) able to produce a welded joint between said longitudinal rods (7) and said transverse rod (8) in said welding position.

6. Welding device according to claim 5, **characterised in that** said clamps (20) are self-centring with respect to said welding position.

7. Welding device according to claim 5 or 6, **characterised in that** said clamps (20) are movably mounted within a plane with respect to said frame (19) by means of guiding means (23, 24, 25).

8. Welding device according to any of the claims 5 to 7, **characterised in that** said clamps (20) are positioned automatically by first driving means that drive the respective first positioning means associated with said clamps (20).

9. Welding device according to claim 7 or 8, **characterised in that** the support (21) of said clamps (20) is movably mounted in a first direction on a transom (26) by first guiding means (23), and **in that** said transom (26) is movably mounted in a second direction on said frame (19) by second guiding means (24).

10. Welding device according to claim 9, **characterised in that** said clamps (20) are movably mounted longitudinally with respect to a support (21) by third guiding means (25).

11. Welding device according to any of the claims 5 to 10, **characterised in that** it comprises a positioning arm (30) for said transverse rods (8), said positioning arm (30) being movable with respect to said frame (19) in the direction of said longitudinal rods (7), between a pick-up position for said transverse rods (8) and a welding position on said framework (6).

12. Welding device according to claim 11, **characterised in that** said positioning arm (30) moves the transverse rod (8) by abutting on the face (29) of transverse rod (8) away from said clamps (20).

13. Welding machine for producing the framework of a reinforced concrete structural element, **characterised in that** it comprises a welding device (18) according to claims 5 to 12.

14. Welding machine according to claim 13, **characterised in that** it comprises support means (12) for said longitudinal rods (7) upstream of said welding device (18), said support means (12) positioning said longitudinal rods (7) in their final position in the framework (6).

15. Welding machine according to claims 13 or 14, **characterised in that** it comprises a dragging carriage (15) for said framework (6) downstream of said welding device (18).
